# EUROPEAN PATENT APPLICATION

(11) **EP 4 817 910 A1**
(43) Date of publication of application: **07.10.2026**
(21) Application number: 26163130.3
(22) Date of filing: 09.03.2026
(51) Int. Cl.: B60H 1/32, B60H 1/00

(54) **REFRIGERANT MODULE**

(30) Priority: 14.03.2025 JP 2025041025
(71) Applicant: Aisin Corporation, Kariya, Aichi 448-8650 (JP)
(72) Inventor: SASAKI, Yu, Kariya 448-8650 (JP); NAKAJIMA, Takuya, Kariya 448-8650 (JP); NAGURA, Kentaro, Kariya 448-8650 (JP); IMAI, Hiroshi, Kariya 448-8650 (JP); KURACHI, Keiichiro, Kariya 448-8650 (JP); YAMAZAKI, Tateki, Kariya 448-8650 (JP); NODA, Ryota, Kariya 448-8650 (JP)
(74) Representative: Winter, Brandl - Partnerschaft mbB

(57) **Abstract**

A characteristic configuration of a refrigerant module according to the present disclosure is as follows: a refrigerant module (A) includes: a manifold (1) in which a refrigerant flow path through which refrigerant flows is formed, and a bracket (2) that holds at least one device (Ad) through which refrigerant flows, the bracket (2) having a casting porosity volume ratio higher than a casting porosity volume ratio of the manifold (1), and the manifold (1) and the bracket (2) are integrated by being coupled.

## Description

### TECHNICAL FIELD

The present disclosure relates to a refrigerant module.

### BACKGROUND DISCUSSION

JP 2024-512151 (Japanese national publication of a PCT application) describes a valve group integrated module in which a main body having an internal flow path and including an electric valve, a second electric valve, an electronic expansion valve, and the like, and a battery pack heat exchanger are coupled with a plate-shaped second divided body interposed therebetween.

Since the refrigerant module described in JP 2024-512151 perform temperature management inside the vehicle by combining a plurality of heat management modes, an electric valve for managing supplying refrigerant, a second electric valve, an electronic expansion valve, and the like are provided in the main body to increase the degree of integration.

The main body of the refrigerant module described in JP 2024-512151 is usually made of a metal material such as aluminum, an internal flow path is formed in the metal material by drilling or the like, and a plurality of electric valves, electronic expansion valves, and the like are provided. It is conceivable that the main body of the refrigerant module is manufactured by a casting technique such as die casting in order to create a pre-designed outer shape with a predetermined thickness.

Here, considering a refrigerant module that manages the temperature inside a vehicle cabin, the refrigerant module requires a plurality of devices, such as a compressor, a chiller, and an accumulator, in addition to a main body, and such a plurality of devices is required to be disposed at optimal positions and in optimal orientations relative to the main body.

Therefore, it is also conceivable to use a bracket that can be coupled to the main body by a bolt or the like, and to provide a plurality of devices for each of the plurality of support portions formed on the bracket. For these reasons, it can be said that manufacturing the bracket by a casting technique such as die casting, which provides predetermined rigidity and facilitates processing for forming the support portion, is effective.

For example, it is also conceivable to individually manufacture the main body of the refrigerant module and the bracket described above by using a die-casting method (hereinafter also referred to as "general die-casting method") in which molding is performed by pressurizing and supplying molten metal to a metal mold. However, in a molded article produced by using a general die-casting method, internal casting porosity may occur. Therefore, when the main body of the refrigerant module is manufactured by the general die-casting method, it is conceivable that leakage of supplying refrigerant from the internal flow path is caused by the casting porosity.

As a casting method for reducing casting porosity inside a product, for example, a technique of metal mold gravity casting is known. However, the casting method that can reduce casting porosity more than the general die-casting method requires more time for casting and thus incurs higher manufacturing costs than the general die-casting method. Therefore, manufacturing the main body of the refrigerant module and the bracket by a casting method that can reduce casting porosity more than the general die-casting method leads to an increase in manufacturing cost.

A need thus exists for a refrigerant module that suppresses an increase in manufacturing cost while making refrigerant leakage less likely.

### SUMMARY

A characteristic configuration of a refrigerant module according to the present disclosure is as follows: a refrigerant module includes a manifold in which a refrigerant flow path through which refrigerant flows is formed, and a bracket that holds at least one device through which refrigerant flows, the bracket having a casting porosity volume ratio higher than a casting porosity volume ratio of the manifold, and the manifold and the bracket are integrated by being coupled.

According to this configuration, since the casting porosity volume ratio of the bracket in which the refrigerant flow path is not formed may be higher than the casting porosity volume ratio of the manifold, for example, one manufactured by a die-casting method in which molten metal is pressurized and supplied to a metal mold can be used. In addition, since the manifold in which the refrigerant flow path is formed needs to have a lower casting porosity volume ratio than the bracket, for example, a manifold manufactured by a technique of metal mold gravity casting or the like can be assumed to be used. As a result, an inconvenience that supplying refrigerant leaks from the refrigerant flow path formed in the manifold can be suppressed, and the manufacturing cost of the entire refrigerant module can be reduced due to a reduction in the manufacturing cost of the bracket. Therefore, a refrigerant module was configured that suppresses an increase in manufacturing cost while making refrigerant leakage less likely.

A characteristic configuration of a refrigerant module according to the present disclosure is as follows: a refrigerant module includes a manifold in which a refrigerant flow path through which refrigerant flows is formed, the manifold being formed by a first method; and a bracket that holds at least one device through which refrigerant flows, the bracket being formed by a second method different from the first method, and the manifold and the bracket are integrated by being coupled.

According to the present configuration, for example, it is conceivable to use a die-casting method in which a technique such as metal mold gravity casting is used as the first method and a molten metal is pressurized and supplied to a metal mold as the second method. As a result, the manufacturing cost of the bracket can be suppressed to be lower than the manufacturing cost of the manifold while the casting porosity volume ratio of the manifold is made lower than the casting porosity volume ratio of the bracket. Therefore, the disadvantage that supplying refrigerant leaks from the refrigerant flow path formed in the manifold can be suppressed, and the manufacturing cost of the entire refrigerant module can be reduced due to a reduction in the manufacturing cost of the bracket. Therefore, a refrigerant module was configured that suppresses an increase in manufacturing cost while making refrigerant leakage less likely.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view illustrating a refrigerant module;
Fig. 2 is a perspective view illustrating a manifold and a bracket of the refrigerant module;
Fig. 3 is a refrigerant circulation circuit diagram of the refrigerant module;
Fig. 4 is a front view of the refrigerant module;
Fig. 5 is a plan view of the refrigerant module;
Fig. 6 is a front view of the refrigerant module including a cross section of the manifold taken along line VI-VI in Fig. 5;
Fig. 7 is a front view of the refrigerant module including a cross section of the manifold taken along line VII-VII in Fig. 5;
Fig. 8 is a cross-sectional view taken along line VIII-VIII in Fig. 4;
Fig. 9 is a cross-sectional view taken along line IX-IX in Fig. 4; and
Fig. 10 is a cross-sectional view taken along line X-X in Fig. 4.

### DETAILED DESCRIPTION

Hereinafter, an embodiment of a refrigerant module according to the present disclosure will be described with reference to the drawings. A refrigerant module A of the present embodiment is not limited to the following embodiments, and various modifications can be made without departing from the gist thereof.

### Basic Configuration

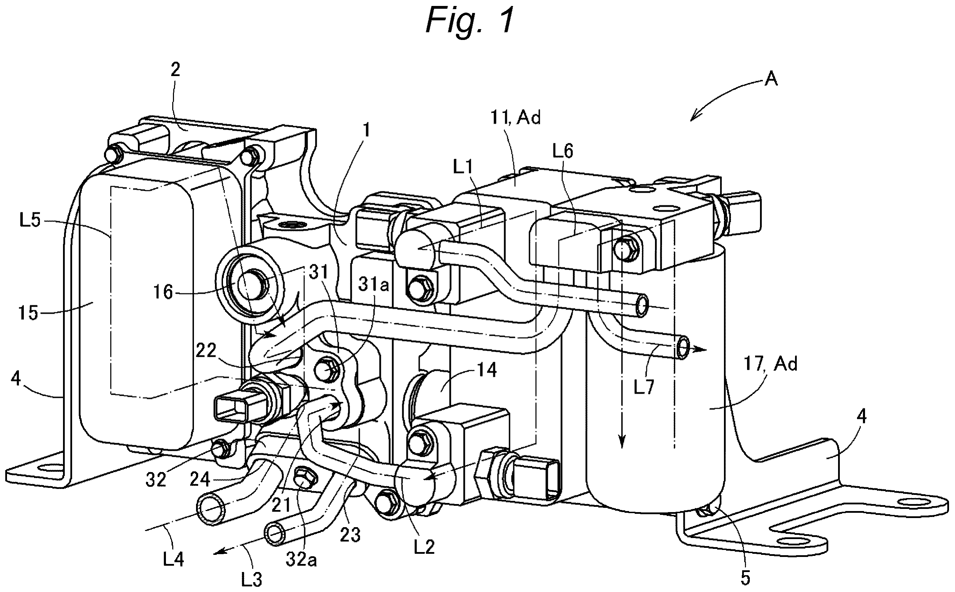

As illustrated in Figs. 1, 3, and 4, the refrigerant module A includes a manifold 1, a bracket 2, a plurality of devices Ad supported by the bracket 2, a plurality of conduits for conveying refrigerant, a compressor 10, and an evaporator 13. In the refrigerant module A, the manifold 1 and the bracket 2 are integrated by being coupled.

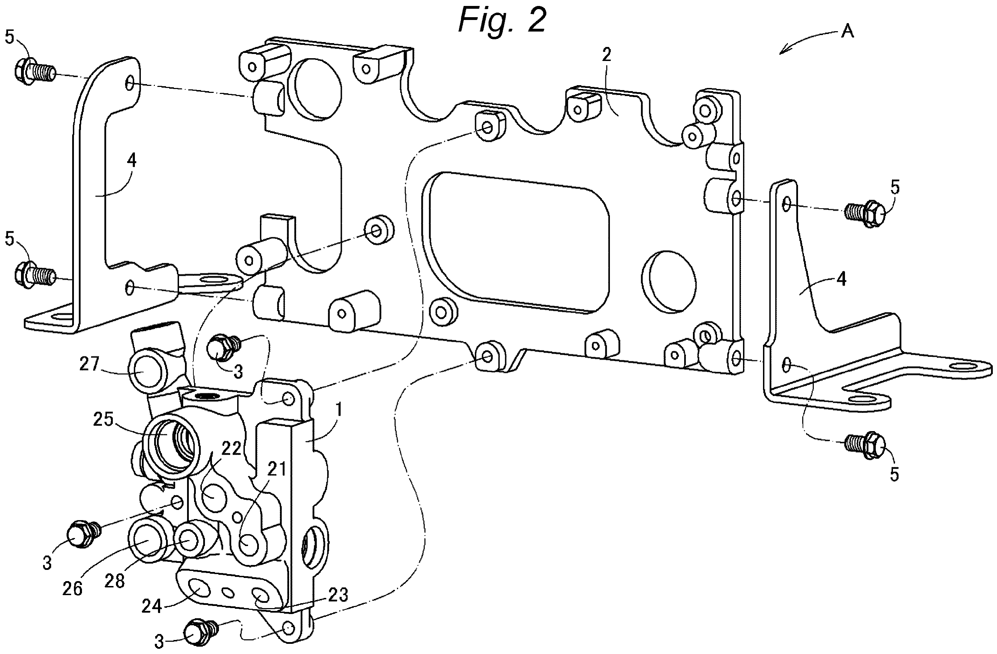

As illustrated in Fig. 2, the bracket 2 and the manifold 1 are coupled and fixed by a plurality of fixing bolts 3. That is, by bringing a pedestal portion formed to protrude on the bracket 2 into contact with a protruding portion formed on the manifold 1, the contact area between the bracket 2 and the manifold 1 is reduced, thereby achieving a reduction in the amount of heat transmitted by heat conduction between the bracket 2 and the manifold 1. A plurality of support frames 4 are fixed to the bracket 2 by coupling bolts 5, and the refrigerant module A is supported by a vehicle body via the support frames 4.

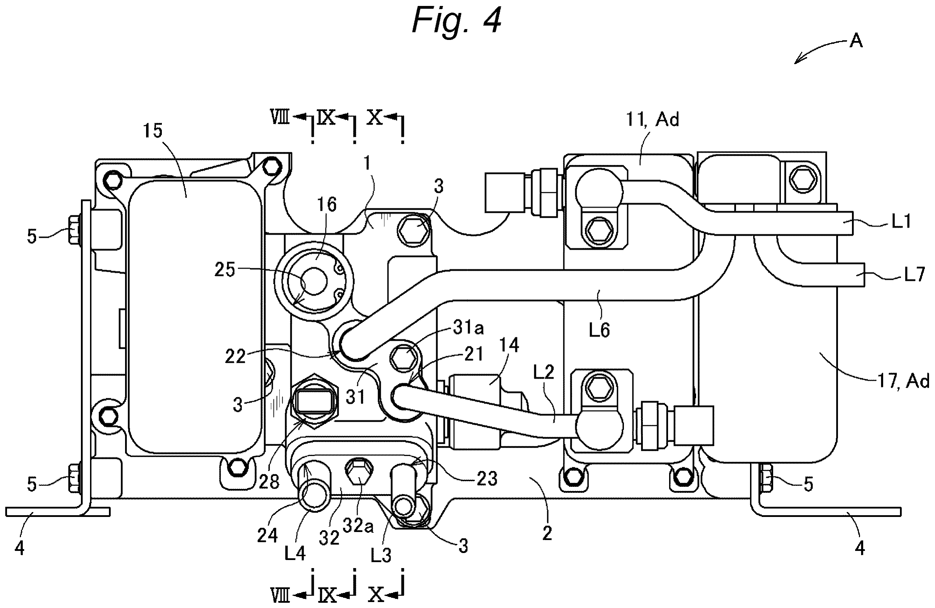

The refrigerant module A enables air conditioning of a cabin of a vehicle (not illustrated). Although the refrigerant module A can be used in any orientation, a vertical relationship and a horizontal relationship will be described in accordance with the orientations illustrated in Figs. 1 and 4. Further, a positional relationship of the refrigerant module A will be described, with the front-side surface of the manifold 1 in the drawing referred to as a front surface, and the opposite side defined as a back surface.

The manifold 1 and the bracket 2 are castings made of aluminum, but are different in casting method. Details of this casting method will be described later.

### Refrigerant Circulation Circuit

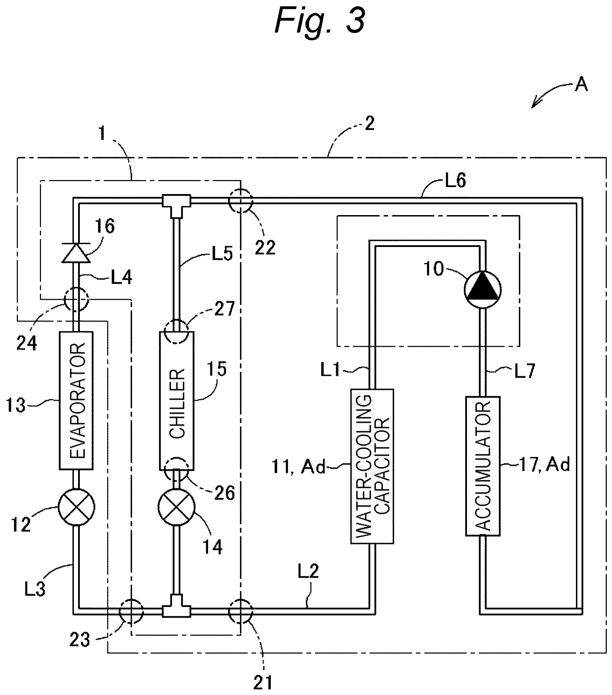

Fig. 3 illustrates a refrigerant circulation circuit of the refrigerant module A. In the refrigerant circulation circuit, refrigerant such as hydrofluorocarbon (HFC) or hydrofluoroolefin (HFO) flows.

In the refrigerant circulation circuit, the compressor 10 (an example of a compressor) compresses refrigerant, and the compressed refrigerant is supplied from a first flow path L1 to a water-cooling capacitor 11 (an example of a condenser). Refrigerant having flowed through the water-cooling capacitor 11 flows from a second flow path L2 to a third flow path L3, and is supplied to a first expansion valve 12 and the evaporator 13 in this order. Moreover, the refrigerant having flowed through the evaporator 13 passes through a check valve 16 of a fourth flow path L4.

The refrigerant having flowed through the water-cooling capacitor 11 branches off upstream of the first expansion valve 12, and is supplied from the second flow path L2 inside the manifold 1 to a second expansion valve 14 and a chiller 15 (an example of an evaporator) in this order.

The refrigerant having flowed through the chiller 15 is conveyed to a fifth flow path L5. The refrigerant having flowed through the fifth flow path L5 merges into the fourth flow path L4 downstream of the check valve 16. A sixth flow path L6 is connected downstream from the merged point between the fourth flow path L4 and the fifth flow path L5. The refrigerant having flowed through the sixth flow path L6 is supplied to an accumulator 17, and is thereafter returned to the compressor 10 via a seventh flow path L7.

As illustrated in Figs. 1, 4, and 5, the water-cooling capacitor 11 and the accumulator 17 are devices Ad held by the bracket 2. The second expansion valve 14, the chiller 15, and the check valve 16 are held by the manifold 1. Moreover, the compressor 10, the first expansion valve 12, and the evaporator 13 are supported by a vehicle body frame or the like.

In the manifold 1, a refrigerant flow path through which refrigerant flows is formed by drilling in a material of the manifold 1 cast from aluminum. That is, it is difficult to manufacture the manifold 1 in which the refrigerant flow path is formed only by casting. Therefore, the manifold 1 in which the refrigerant flow path is formed is implemented by performing drilling on a casting (material of the manifold 1) to be subjected to drilling.

### Arrangement of Flow Paths

As illustrated in Figs. 1, 3, and 4, the manifold 1 includes a first input port 21 that receives refrigerant from the second flow path L2, a first output port 22 that conveys refrigerant to the sixth flow path L6, a second output port 23 that supplies refrigerant to the evaporator 13, and a second input port 24 that receives refrigerant from the evaporator 13. These are formed by drilling the material of the manifold 1.

The manifold 1 is formed with a valve space 25 for accommodating the check valve 16, a supply opening 26 for supplying refrigerant to the chiller 15, a discharge opening 27 for receiving refrigerant from the chiller 15, and a sensor port 28. These are formed by drilling the material of the manifold 1.

Flow paths individually formed inside the manifold 1 by drilling from each of the first output port 22, the second output port 23, the second input port 24, and the sensor port 28 serve as refrigerant flow paths. Details of the arrangement and the like of the refrigerant flow paths formed inside the manifold 1 will be described later.

The refrigerant module A includes the first flow path L1 constituted by a conduit for supplying refrigerant compressed by the compressor 10 to the water-cooling capacitor 11, and the seventh flow path L7 for supplying refrigerant from accumulator 17 to the compressor 10. The seventh flow path L7 includes a conduit formed outside the manifold 1 and a refrigerant flow path formed inside the manifold 1.

The refrigerant module A includes the sixth flow path L6 for supplying refrigerant from the first output port 22 to the accumulator 17, and the second flow path L2 for supplying refrigerant from the water-cooling capacitor 11 to the first input port 21. The sixth flow path L6 and the second flow path L2 are configured by a conduit formed outside the manifold 1 and a refrigerant flow path formed inside the manifold 1.

The refrigerant module A includes the third flow path L3 for supplying refrigerant from the second output port 23 to the evaporator 13, and the fourth flow path L4 for supplying refrigerant from the evaporator 13 to the second input port 24. The third flow path L3 and the fourth flow path L4 are configured by a conduit formed outside the manifold 1 and a refrigerant flow path formed inside the manifold 1.

That is, the second flow path L2 is formed not only in the conduit illustrated in Fig. 1 but also inside the manifold 1 extending from the first input port 21. Similarly, the third flow path L3 is formed not only in the conduit but also inside the manifold 1 extending from the second output port 23. The fourth flow path L4 is formed not only in the conduit but also inside the manifold 1 extending from the second input port 24. The sixth flow path L6 is formed not only in the conduit but also inside the manifold 1 extending from the first output port 22.

As illustrated in Fig. 1, the end portion of the second flow path L2 and the end portion of the sixth flow path L6 corresponding to the first input port 21 and the first output port 22 are disposed in proximity to each other. A first holder 31, which fixes the end portion of the conduit constituting a part of the second flow path L2 and the end portion of the conduit constituting a part of the sixth flow path L6, which are disposed in proximity to each other in the manner described above, to the manifold 1, is fixed to the outer surface of the manifold 1 with a first bolt 31a.

Similarly, a second holder 32, which fixes the third flow path L3 and the fourth flow path L4 corresponding to the second output port 23 and the second input port 24 to the manifold 1, is fixed to the outer surface of the manifold 1 with a second bolt 32a.

### Manifold

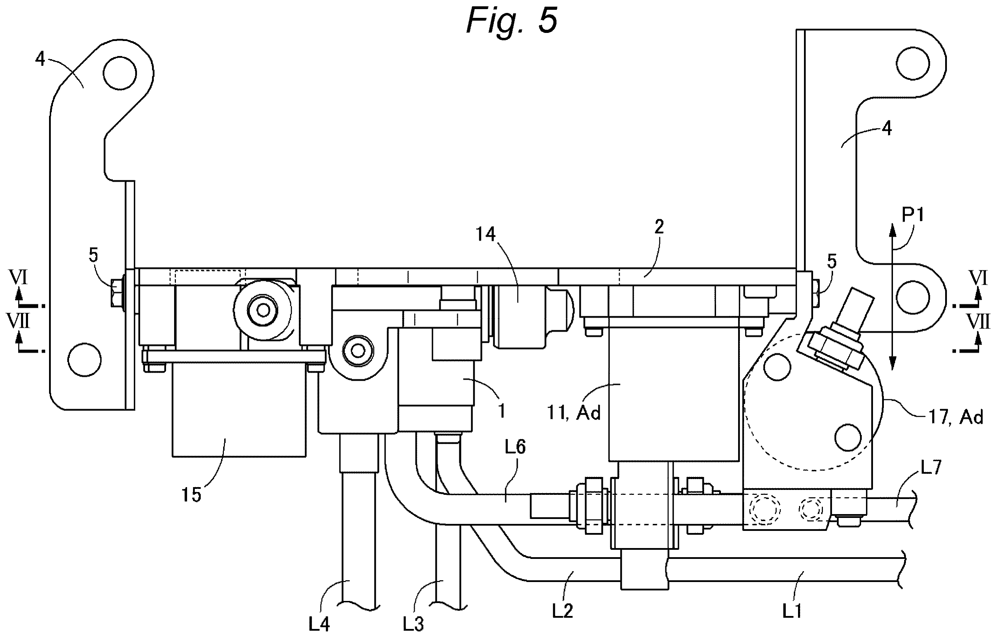

As illustrated in Fig. 5, in the manifold 1, a refrigerant flow path is formed by drilling each of a first flow path layer T1 located close to the back surface and a second flow path layer T2 located closer to the front surface in the front-rear direction (first direction P1). By forming the refrigerant flow paths in a plurality of layers in this manner, the dimension of the manifold 1 in the front-rear direction slightly increases, but the overall increase in size is suppressed. Note that a layer including the first flow path layer T1 and the second flow path layer T2 may be collectively referred to as a flow path layer T.

### Manifold: First Flow Path Layer

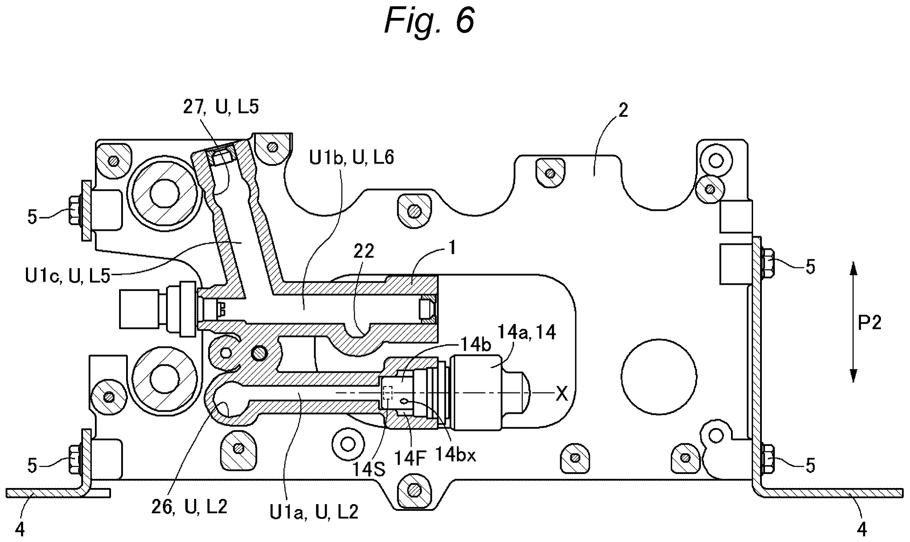

As illustrated in Fig. 6, the manifold 1 is formed, in the first flow path layer T1, with a first flow path hole U1a having a horizontal orientation on the lower side in the vertical direction (second direction P2), a second flow path hole U1b having a horizontal orientation on the upper side in the vertical direction (second direction P2), and a third flow path hole U1c merging into the end portion of the second flow path hole U1b in an oblique orientation.

The first flow path hole U1a, the second flow path hole U1b, and the third flow path hole U1c constitute a part of the refrigerant flow path.

### Manifold: Second Flow Path Layer

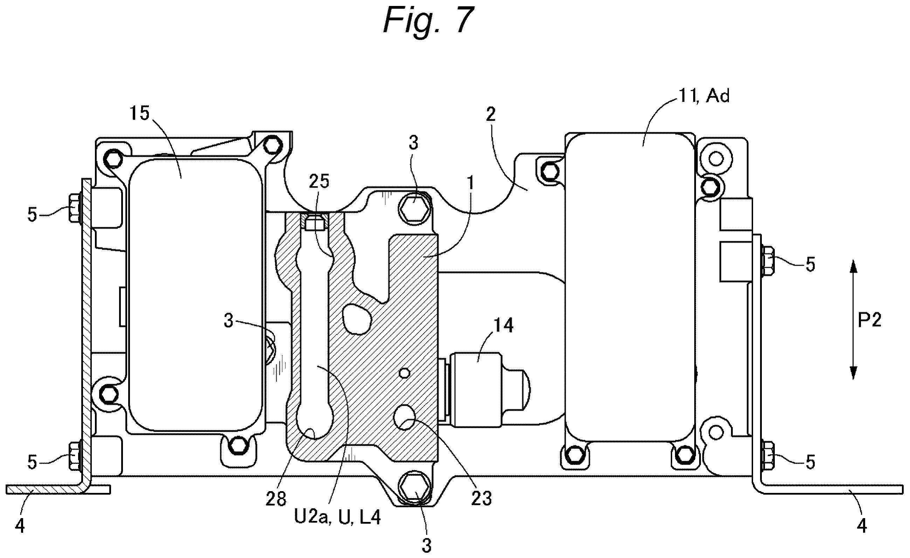

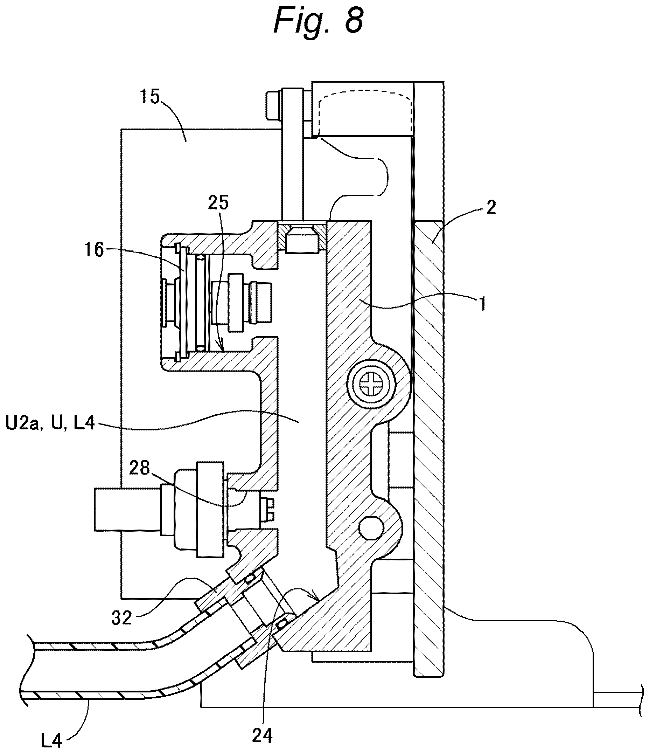

As illustrated in Figs. 7 and 8, the manifold 1 is formed, in the second flow path layer T2, with a vertical flow path hole U2a in a vertical direction. Note that the first flow path hole U1a, the second flow path hole U1b, the third flow path hole U1c, and the vertical flow path hole U2a may be collectively referred to as a flow path hole U. The vertical flow path hole U2a constitutes a part of the refrigerant flow path.

The vertical flow path hole U2a forms a part of the fifth flow path L5, the valve space 25 communicates with the upper end portion, and the check valve 16 is accommodated in the valve space 25. The sensor port 28 communicates with the lower end portion of the vertical flow path hole U2a. The sensor port 28 includes a temperature sensor that detects the refrigerant temperature and a pressure sensor that detects the refrigerant pressure.

As described above, in the manifold 1, the flow path hole U is formed in each of the first flow path layer T1 and the second flow path layer T2, so that the refrigerant flow can be controlled without causing an increase in size.

### Manifold: Branch Portion of First Flow Path Layer

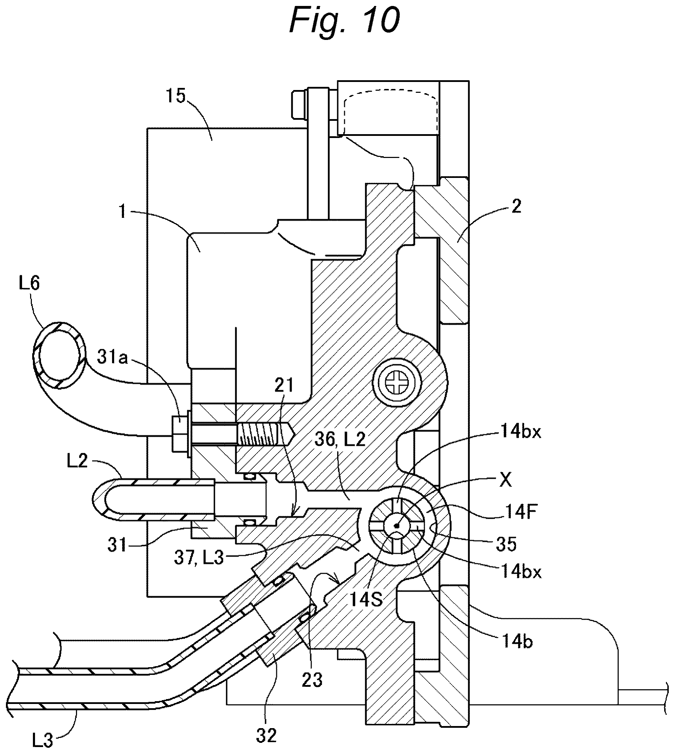

As illustrated in Figs. 6 and 10, the manifold 1 includes a branch portion that branches and causes the refrigerant to flow by using the primary chamber 14F of the second expansion valve 14.

In the second expansion valve 14, a valve body 14a and a fitting portion 14b are integrally formed. A needle (not illustrated) is accommodated in the fitting portion 14b, and an electric actuator (not illustrated) is accommodated inside the valve body 14a. In the manifold 1, in the first flow path layer T1, an insertion hole portion 35 is formed at the outer end (the right end in Fig. 6) of the first flow path hole U1a, into which a fitting portion 14b of the second expansion valve 14 can be inserted.

The second expansion valve 14 is formed with a primary chamber 14F to which refrigerant is supplied and a secondary chamber 14S that conveys refrigerant in the expanded state. As illustrated in Fig. 10, the fitting portion 14b has a columnar shape centered on a central axis X, and the insertion hole portion 35 has a circular cross-sectional shape. As a result, the second expansion valve 14 is held by the manifold 1 in a configuration in which the fitting portion 14b is inserted into the insertion hole portion 35.

The primary chamber 14F is formed in an annular shape centered on the central axis X between the outer periphery of the fitting portion 14b and the inner peripheral surface of the insertion hole portion 35. The primary chamber 14F communicates with a communication hole 14bx formed in the radial direction (radial direction about the central axis X) of the fitting portion 14b (the communication hole 14bx is also included in the primary chamber 14F).

In the first flow path hole U1a, the secondary chamber 14S is formed at a position on the inner end side (the left end side in Fig. 6) of the fitting portion 14b near the outer end. The end portion (the left side end in Fig. 6) of the first flow path hole U1a, which is opposite to the second expansion valve 14, communicates with the supply opening 26. In the internal space of the fitting portion 14b, a region (upstream side) communicating with the communication hole 14bx is the primary chamber 14F, and the secondary chamber 14S is formed downstream of the primary chamber 14F in the internal space.

The second expansion valve 14 accommodates an electric actuator (not illustrated) inside the valve body 14a, accommodates a needle (not illustrated) inside the fitting portion 14b, and enables opening and closing of the needle by a driving force of the electric actuator. As a result, when the needle opens, the second expansion valve 14 supplies the refrigerant in the primary chamber 14F from the communication hole 14bx to the inside of the fitting portion 14b, and conveys the refrigerant in the expanded state from the internal space of the fitting portion 14b to the secondary chamber 14S.

The manifold 1 is formed with the first input port 21 and the second output port 23 at positions in proximity to the fitting portion 14b of the second expansion valve 14. The manifold 1 is formed with a first flow path portion 36 connected from the first input port 21 to the primary chamber 14F (an annular space between the fitting portion 14b and the insertion hole portion 35) in communication. The manifold 1 is also formed with a second flow path portion 37 connected from the second output port 23 to the primary chamber 14F in communication.

With such a configuration, when opened, the second expansion valve 14 causes the refrigerant supplied to the first input port 21 to flow from the primary chamber 14F of the second expansion valve 14 into the first flow path hole U1a (second flow path L2) in the expanded state, and supplies the refrigerant to the chiller 15 via the supply opening 26.

The primary chamber 14F functions as a branch portion. That is, the refrigerant supplied from the second flow path L2 to the first input port 21 flows from the first flow path portion 36 to the annular primary chamber 14F, and branches from the primary chamber 14F to flow to the second flow path portion 37. The refrigerant having flowed through the second flow path portion 37 flows from the second output port 23 to the third flow path L3, and is further supplied to the evaporator 13.

As described above, since the branch portion causes the refrigerant supplied from the first flow path portion 36 to the annular primary chamber 14F to flow into the annular region of the primary chamber 14F and then conveys the refrigerant to the second flow path portion 37, the branch portion gently changes a flow direction of the refrigerant, thereby reducing a pressure loss as compared with a branch structure in which the refrigerant is bent at a steep angle.

In the manifold 1, in the first flow path layer T1, the first output port 22 communicates with an intermediate position in the lateral direction (longitudinal direction) of the second flow path hole U1b, and the discharge opening 27 communicates with an upper end position of the third flow path hole U1c.

That is, the second flow path hole U1b forms a part of the sixth flow path L6, and the third flow path hole U1c forms a part of the fourth flow path L4.

In the manifold 1, the first flow path portion 36 and the second flow path portion 37 communicating with the primary chamber 14F of the second expansion valve 14 are set such that, as viewed in a direction parallel to the central axis X, a side (the left side in Fig. 10) parallel to a direction in which refrigerant flows from the first flow path portion 36 to the primary chamber 14F and a side in which refrigerant flows from the primary chamber 14F to the second flow path portion 37 are the same (the left in Fig. 10).

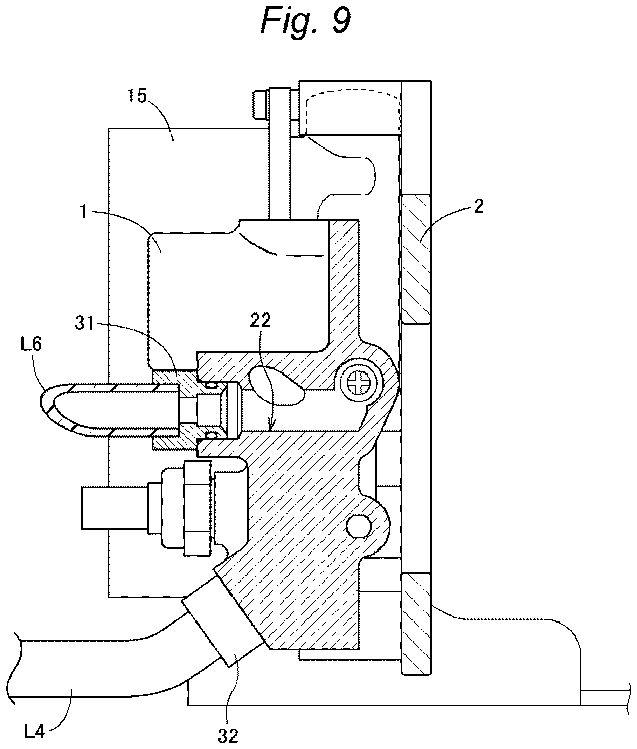

That is, the first input port 21 and the second output port 23 are disposed on the front surface of the manifold 1. As illustrated in Fig. 9, in the manifold 1, a refrigerant flow path for supplying refrigerant to the sixth flow path L6 is formed on the front surface of the manifold 1.

### Refrigerant Flow in Manifold

As partially described above, the refrigerant module A includes a refrigerant flow path that circulates refrigerant from the compressor 10 (compressor) to the chiller 15 (evaporator) and then to the evaporator 13, in this order. In the refrigerant flow path, at least a part between the water-cooling capacitor 11 and the chiller 15 and at least a part between the chiller 15 and the compressor 10 are formed in the manifold 1. That is, a part of the second flow path L2, the entire fifth flow path L5, and a part of the sixth flow path L6 are formed in the manifold 1.

In particular, in the manifold 1, the first input port 21 that receives the refrigerant from the second flow path L2 and the second output port 23 that conveys the refrigerant to the evaporator 13 are in an adjacent positional relationship, and the refrigerant flow paths communicating with these ports are also in a positional relationship in proximity inside the manifold 1.

The manifold 1 is made of an aluminum material having good heat conduction. This enables heat exchange between refrigerant received from the first input port 21 and refrigerant conveyed from the second output port 23, and refrigerant flowing through the third flow path hole U1c and the second flow path hole U1b and refrigerant flowing through the vertical flow path hole U2a.

### Casting

Examples of a manufacturing method for manufacturing the manifold 1 and the bracket 2 of the refrigerant module A include (1) general die casting, (2) vacuum die casting, (3) laminar flow filling die casting, (4) low-pressure casting, and (5) gravity casting.
(1) In general die casting, casting is performed by pressurizing and supplying molten metal to a mold (metal mold), thereby achieving high-speed casting, and a casting porosity volume ratio indicating a ratio of a volume of casting porosity to an entire molded article is 1 to 3%.
(2) Vacuum die casting enables casting in a state in which molten metal flow is improved by keeping the inside of a mold (metal mold) in a vacuum state, and a casting porosity volume ratio is approximately 0 to 1%.
(3) Laminar flow filling die casting enables casting in a state in which gas entrapment into molten metal is reduced by filling a mold (metal mold) with molten metal at a low speed, and a casting porosity volume ratio is approximately 0 to 0.1%.
(4) Low-pressure casting enables casting in a state in which entrapment of air or the like into molten metal is suppressed in the mold by supplying low-speed and low-pressure molten metal to a mold (sand mold), and a casting porosity volume ratio is approximately 0 to 0.01%.
(5) Gravity casting achieves casting in which entrapment of air or the like into molten metal is suppressed by supplying molten metal to a mold (sand mold) only by the weight of the molten metal, and a casting porosity volume ratio is approximately 0 to 0.003%.

In the general die-casting method in (1), the time required for casting is short, and the manufacturing cost can be reduced. On the other hand, in the casting methods shown in (2) to (5), the time required for casting becomes longer and the manufacturing cost increases as the casting porosity volume ratio decreases.

Note that the casting method is not limited to the five methods described above, and may be a different method. As a material used for casting, a metal material such as magnesium, tin, or zinc may be used in addition to aluminum, or casting may be performed using a plurality of metal materials.

As described above, in the manifold 1, since a plurality of flow path layers T are set inside and a refrigerant flow path is formed in each of the flow path layers T, a predetermined thickness in the first direction P1 is required in order to form the refrigerant flow path. In addition, since the refrigerant flow path is formed inside the manifold 1 by drilling, it is conceivable that leakage of the refrigerant is caused in a case where casting porosity exists inside the material of the manifold 1. For this reason, the material of the manifold 1 is required to have a low casting porosity volume ratio.

Since the bracket 2 holds the water-cooling capacitor 11, the accumulator 17, and the like, the casting porosity volume ratio is not an issue as long as the required strength is obtained.

For this reason, the manifold 1 uses a material manufactured by a casting method such as the laminar flow filling die casting in (3), the gravity casting in (5), or the low-pressure casting in (4) described above. As the bracket 2, a material manufactured by the general die-casting method of (1) is used.

As described above, by using different casting methods for the material of the manifold 1 and the bracket 2, the bracket 2 is manufactured at low cost while leakage of the cooling medium is suppressed in the manifold 1, and an increase in manufacturing cost of the entire refrigerant module A is suppressed.

In particular, the casting method for manufacturing the material of the manifold 1 can be regarded as a first method, and the casting method for manufacturing the bracket 2 can be regarded as a second method different from the first method.

That is, a proposal can be made that the refrigerant module A be formed by including a manifold in which a refrigerant flow path through which refrigerant flows is formed, the manifold being formed by a first method, and a bracket that holds at least one device through which refrigerant flows, the bracket being formed by a second method different from the first method, and by integrating the manifold and the bracket by coupling.

When the refrigerant module A is manufactured by using the first method and the second method as described above, the refrigerant flow path is formed by drilling the material of the manifold 1 manufactured by the first method, the device Ad is provided in the bracket 2, the manifold 1 and the bracket 2 are coupled by the fixing bolt 3, and the flow path is formed between the refrigerant flow path of the manifold 1 and the device Ad provided in the bracket 2, whereby the refrigerant module A is completed.

### Operation and Effect of Embodiment

As described above, it is desirable to manufacture the material of the manifold 1 by a casting method (e.g., gravity casting) in which the manifold 1 has a low casting porosity volume ratio. As described above, by forming the refrigerant flow path by drilling the material of the manifold 1 manufactured by a casting method having a low casting porosity volume ratio, it is possible to enable efficient heat exchange through favorable circulation of the refrigerant while suppressing problems such as leakage of the refrigerant flowing through each refrigerant flow path to the outside via casting porosity.

In addition, by manufacturing the bracket 2 by a casting method (e.g., general die casting) having a lower casting porosity volume ratio than that of the material of the manifold 1, an increase in cost can be suppressed. In this manner, by manufacturing the bracket 2 by casting, the device Ad can be disposed at optimal locations and in optimal orientations relative to the main body.

In the refrigerant module A, the manifold 1 and the bracket 2 are coupled by a plurality of fixing bolts 3, and a contact area between the manifold 1 and the bracket 2 in this coupled state is reduced, thereby suppressing a phenomenon in which the amount of heat is wastefully lost.

The manifold 1 is made of an aluminum material with good thermal conductivity, and since a plurality of flow paths are arranged in proximity to each other inside the manifold 1, heat exchange between refrigerants flowing through adjacent flow paths is also achieved.

Two flow path layers of the first flow path layer T1 and the second flow path layer T2 are set in the manifold 1, and the refrigerant flow path is formed by drilling each of the set flow path layers T, thereby achieving downsizing of the manifold 1. When viewed in the front-rear direction, the first flow path hole U1a formed in the first flow path layer T1 of the manifold 1 and the vertical flow path hole U2a formed in the second flow path layer T2 are disposed in a positional relationship in which the first flow path hole U1a and the vertical flow path hole U2a intersect as viewed in a predetermined direction, so that the refrigerant flow paths can be disposed without difficulty.

### Other Embodiments

The present disclosure may be configured as described below in addition to the embodiment described above (components having the same functions as those of the embodiment are assigned reference numerals and symbols common to the embodiment).

(a) When the material of the manifold 1 and the bracket 2 are manufactured by different casting methods, the material of the manifold 1 can be used for the refrigerant module A as long as a casting porosity volume ratio in a casting step of casting the material of the manifold 1 is lower than a casting porosity volume ratio in a casting step of casting the bracket 2.

The casting porosity volume ratio decreases in the following order: (1) general die casting, (2) vacuum die casting, (3) laminar flow filling die casting, and (4) low-pressure casting described above. Therefore, the material of the manifold 1 can be manufactured by a casting method of vacuum die casting, and the bracket 2 can be manufactured by a casting process of general die casting.

(b) In order to couple the manifold 1 and the bracket 2, it is also conceivable to use a rivet or braze the manifold 1 and the bracket 2 without using the coupling bolt 5. In order to reduce the amount of heat transferred between the manifold 1 and the bracket 2, a coupling configuration in which the contact area between the manifold 1 and the bracket 2 is reduced is desirable.

(c) For example, three or more flow path layers may be formed in the manifold 1. The flow path layers may be arranged in parallel so as to overlap each other in the vertical direction.

(d) The manifold 1 can be configured such that an electromagnetic switching valve is provided in the manifold 1 or the check valve 16 described in the embodiment is provided outside the manifold 1. In addition, an arbitrary device Ad can be provided in the bracket 2.

Note that the configurations disclosed in the above embodiments (including other embodiments; the same applies hereinafter) can be applied in combination with configurations disclosed in other embodiments as long as no contradiction arises, and the embodiments disclosed in the present specification are illustrative, and the embodiments of the present disclosure are not limited thereto, and can be appropriately modified within a range that does not depart from the purpose of the present disclosure.

In the embodiment described above, the following configuration is conceived.
(1)A refrigerant module A including: a manifold 1 in which a refrigerant flow path through which refrigerant flows is formed; and a bracket 2 that holds at least one device Ad through which refrigerant flows, and has a casting porosity volume ratio higher than a casting porosity volume ratio of the manifold 1, wherein the manifold 1 and the bracket 2 are integrated by being coupled.

Accordingly, since the bracket 2 and the manifold 1 are integrated by being coupled, the device Ad (the condenser (water-cooling capacitor 11) and the accumulator 17) can be held by the bracket and disposed at an appropriate position. According to this configuration, since the casting porosity volume ratio of the bracket 2 may be higher than the casting porosity volume ratio of the manifold 1, for example, one manufactured by a die-casting method in which molten metal is pressurized and supplied to a metal mold can be used. In addition, since the manifold 1 needs to have a lower casting porosity volume ratio than the bracket 2, for example, it can be assumed that the manifold 1 manufactured by a technique of metal mold gravity casting or the like is used. As a result, the inconvenience that the refrigerant leaks from the refrigerant flow path formed in the manifold 1 can be suppressed, and the manufacturing cost of the entire refrigerant module A can be reduced due to a reduction in the manufacturing cost of the bracket 2.

Further, in the embodiment described above, the following configuration is conceived.

(2) A refrigerant module A including: a manifold 1 in which a refrigerant flow path through which refrigerant flows is formed, the manifold 1 being formed by a first method; and a bracket 2 that holds at least one device Ad through which refrigerant flows, and is formed by a second method different from the first method, wherein the manifold 1 and the bracket 2 are integrated by being coupled.

Accordingly, for example, it is conceivable to use a die-casting method in which a technique of metal mold gravity casting is used as the first method and a molten metal is pressurized and supplied to a metal mold as the second method. As a result, the manufacturing cost of the bracket 2 can be suppressed to be lower than the manufacturing cost of the manifold 1 while the casting porosity volume ratio of the manifold 1 is made lower than the casting porosity volume ratio of the bracket 2. Therefore, the disadvantage that supplying refrigerant leaks from the refrigerant flow path formed in the manifold 1 can be suppressed, and the manufacturing cost of the entire refrigerant module can be reduced due to a reduction in the manufacturing cost of the bracket 2.

(3) In the refrigerant module A of each of (1) and (2), the refrigerant flow path is a flow path that circulates the refrigerant between a compressor (compressor 10), a condenser (water-cooling capacitor 11), and an evaporator (chiller 15), and in the refrigerant flow path, at least a part between the condenser (water-cooling capacitor 11) and the evaporator (chiller 15) and at least a part between the evaporator (chiller 15) and the compressor (compressor 10) are preferably formed in the manifold 1.

Accordingly, it is possible to facilitate heat exchange in the manifold 1 between refrigerant supplied from the condenser (water-cooling capacitor 11) to the evaporator (chiller 15) and refrigerant supplied from the evaporator (chiller 15) to the compressor (compressor 10). This also makes it possible to improve thermal efficiency. Since not the entire refrigerant flow path is accommodated in the manifold 1 but only a part of the refrigerant flow path is accommodated in the manifold 1, the manifold 1 manufactured by a manufacturing method having a low casting porosity volume ratio can be reduced in size, thereby reducing manufacturing cost.

(4) In the refrigerant module A according to any one of (1) to (3), it is preferable that the manifold 1 includes a plurality of flow path layers T in each of which a part of the refrigerant flow path is formed, the bracket 2 and the plurality of flow path layers T are stacked, and a part of the refrigerant flow path in one of the plurality of flow path layers T and a part of the refrigerant flow path in another flow path layer T of the plurality of flow path layers T intersect as viewed in the stacking direction of the bracket 2 and the plurality of flow path layers T.

Accordingly, a plurality of flow path layers T formed in the manifold 1 and the bracket 2 are disposed in a stacked positional relationship. As a result, for example, the manifold 1 can be downsized as compared with a configuration in which a plurality of refrigerant flow paths are formed in a single layer. The refrigerant flow path formed in the flow path layer T of the manifold 1 intersects another flow path layer T as viewed in the stacking direction (as viewed in the direction along the first direction P1), thereby enabling reasonable arrangement of the refrigerant flow paths.

The present disclosure is applicable to a refrigerant module A.

## Claims

1. A refrigerant module (A) comprising:
a manifold (1) in which a refrigerant flow path through which refrigerant flows is formed; and
a bracket (2) that holds at least one device (Ad) through which refrigerant flows, and has a casting porosity volume ratio higher than a casting porosity volume ratio of the manifold (1),
wherein the manifold (1) and the bracket (2) are integrated by being coupled.

2. A refrigerant module (A) comprising:
a manifold (1) in which a refrigerant flow path through which refrigerant flows is formed, the manifold (1) being formed by a first method; and
a bracket (2) that holds at least one device (Ad) through which refrigerant flows, and is formed by a second method different from the first method,
wherein the manifold (1) and the bracket (2) are integrated by being coupled.

3. The refrigerant module (A) according to Claim 1 or 2, wherein
the refrigerant flow path is a flow path that circulates a refrigerant between a compressor (10), a condenser (11), and an evaporator (15), and
in the refrigerant flow path, at least a part between the condenser (11) and the evaporator (15) and at least a part between the evaporator (15) and the compressor (10) are formed in the manifold (1).

4. The refrigerant module (A) according to Claim 1 or 2, wherein
the manifold (1) includes a plurality of flow path layers (T) in each of which a part of the refrigerant flow path is formed,
the bracket (2) and the plurality of flow path layers (T) are stacked, and
a part of the refrigerant flow path in one of the plurality of flow path layers (T) and a part of the refrigerant flow path in another one of the plurality of flow path layers (T) intersect as viewed in a stacking direction of the bracket (2) and the plurality of flow path layers (T).

5. The refrigerant module (A) according to Claim 2, wherein the second method requires less time for casting than the first method.

6. The refrigerant module (A) according to Claim 2, wherein
the second method is a general die-casting method of pressurizing and supplying molten metal to a mold, and
the first method is one of vacuum die casting, laminar flow filling die casting, low-pressure casting, and gravity casting.

7. The refrigerant module (A) according to Claim 1 or 2, wherein the device (Ad) is a heat exchanger.

8. The refrigerant module (A) according to Claim 3, wherein the condenser (11) is held by the bracket (2).
